# EUROPEAN PATENT SPECIFICATION

(11) **EP 3 176 708 B1**
(45) Date of publication and mention of the grant of the patent: **20.11.2019**
(21) Application number: 16169778.4
(22) Date of filing: 16.05.2016
(51) Int. Cl.: G06F 16/36, G06F 17/27

(54) **METHOD AND SYSTEM FOR CONSTRUCTING NATURAL LANGUAGE PROCESSING SCHEMA AND KNOWLEDGE DATABASE THEREOF**
VERFAHREN UND SYSTEM ZUR HERSTELLUNG EINES NATÜRLICHEN SPRACHENVERARBEITUNGSSYSTEMSCHEMAS UND WISSENSDATENBANK DAFÜR
PROCÉDÉ ET SYSTÈME DE CONSTRUCTION DE SCHÉMA DE TRAITEMENT DE LANGAGE NATUREL ET BASE DE DONNÉES DE CONNAISSANCES DE CELUI-CI

(30) Priority: 03.12.2015 KR 20150171222; 28.01.2016 KR 20160010591
(43) Date of publication of application: 07.06.2017
(73) Proprietor: Korea Advanced Institute of Science and Technology, Daejeon 34141 (KR)
(72) Inventor: CHOI, Key-Sun, 34141 Daejeon (KR); HAHM, Young Gyun, 34141 Daejeon (KR); NAM, Sangha, 34141 Daejeon (KR); CHOI, GyuHyeon, 34141 Daejeon (KR)
(74) Representative: AWA Sweden AB

(56) References cited:
- US-A1- 2014 163 955
- US-A1- 2015 120 738
- US-B1- 8 429 179

## Description

### BACKGROUND

Embodiments of the inventive concept described herein relate to a method for constructing a natural language processing schema and knowledge database thereof, and more particularly, relate to a method for constructing a schema about natural language processing annotation information to respective words, and a database thereof, by entitizing words of a text.

With recent sprightliness on study for semantic web and big data, the demand for processing language resources is abruptly increasing. Many studies for constructing language resources are progressing in variety based on ontology. US 2014/163955 A1 discloses a system and method for extracting ontological information from a body of text. US 2015/120738 A1 discloses a system and method for document classification based on semantic analysis of the document.

In the meantime, for the purpose of solving problems relevant to approachability to Natural Language Processing (NLP) annotation which is present in various forms of data, there are also progressing studies for defining NLP annotation information based on ontology.

A general method for processing NLP annotation information is performed by processing metadata of a text to construct ontology and by simply storing annotation information of the unit of sentence. This method is advantageous to a user to allow to use data of the same format, but to cause degradation of search quality and speed when the user requires detailed information about words or about structures between words.

Therefore, there is a need for an NLP annotation information processing method providing stable and reliable information to a user with high approachability.

### SUMMARY

Examples of the present invention provide a method and system for constructing an NLP schema to a text, associating annotation information related to each of the words included in the text, with each of the words.

Examples of the present invention provide a method and system for constructing a linguistic knowledge database, when indexing character strings such as words, allowing a user to understand usage of corresponding words, structure of sentences related to corresponding words, or language structures and sense relations between several words.

One aspect of examples of the present invention is directed to provide a method for constructing a schema for a text. The method may include performing a Natural Language Processing, NLP, for a received text to generate an annotation information; storing and outputting the annotation information; identifying at least one word included in the text for constructing the schema for the text, performing entitization of the word in a Resource Description Framework, RDF, schema, and indexing the entitized word, associating identification information, which includes position information related to the identified word, with the identified word, identifying relation information between the identified word and another word included in the text, based on the identification information, constructing the schema for the text based on the identification information and the relation information, and storing a graph corresponding to the schema, and/or information indicating a relation between the word and the annotation information thereof, in the database.

A word included in the text may be a character or a continuous character string, which has a sense, in the text.

The identifying of the at least one word may include determining target words, which are valid in constructing the schema, from words included in the text, and extracting the determined target words.

The associating of the identification information may include associating identification information of each of the extracted target words with a corresponding target word of the extracted target words.

The identifying of the relation information may include identifying relation information between at least two target words of the extracted target words.

The constructing of the schema may include determining a plurality of nodes associated with each of the extracted target words and identification information associated with each of the extracted target words, connecting a first node associated with a first target word of the extracted target words, with a second node associated with a second target word of the extracted target words related to the first target word, based on identified relation information, and connecting the first node with a node of the plurality of nodes that indicates identification information of the first target word and connecting a second node with a node of the plurality of nodes that indicates identification information of the second target word.

The first target word may be a word included in a search keyword input by a user.

Information on correlation between the identified word and the identified information may be stored in a database.

The identification information may include at least one of Uniform Resource Identifier (URI), information indicating a part of speech of the identified word, and linguistic information of the identified word.

The identification information may include at least one of information indicating a position of the text in a document including the text, information indicating a position of the identified word in the text, information indicating a result of morphological analysis of the identified word, information indicating a part of speech of the identified word, information indicating a named entity of the identified word, and information indicating a tag of the named entity of the identified word.

If the identified word is a word included in another text different from the text, the identifying of the relation information may include identifying relation information between the identified word and another word included in the another text.

The constructing of the schema may include constructing a schema for the another text based on identification information of the identified word and relation information between the identified word and the another word included in the another text.

The relation information may include information indicating dependency between the identified word and the another word.

The dependency may be at least one of nexus, subject-object relation, and modification between the identified word and the another word.

In accordance with another example of the present invention, a method for constructing a database for a schema for a text may include identifying at least one word included in the text, associating identification information, which includes position information related to the identified word, with the identified word, identifying relation information between the identified word and another word included in the text, constructing the schema for the text based on the identification information and the relation information based on the identification information, and storing the constructed schema in the database.

In accordance with another example of the present invention, a method for for providing a search result using a schema for a text may include identifying at least one word included in the text, associating identification information, which includes position information related to the identified word, with the identified word, identifying relation information between the identified word and another word included in the text, constructing the schema for the text based on the identification information and the relation information based on the identification information, receiving a search keyword from a user; and if the search keyword includes the identified word, providing the search result, which is based on the constructed schema, as a result for search request of the user with the search keyword.

In accordance with still another example of the present invention, a system for processing information included in a text, the system may include a communication unit configured to receive the text to generate an annotation information, a control unit configured to perform a Natural Language Processing, NLP, for a received text, to output an annotation information, identify at least one word included in the text, to perform entitization of the word in a Resource Description Framework, RDF, schema, and to index the entitized word, to associate identification information, which includes position information related to the identified word, with the identified word, to identify relation information between the identified word and another word included in the text, based on the identification information, and to construct a schema based on the identification information and the relation information,; and a storage configured to store the annotation information, a graph corresponding to the constructed schema, and/or information indicating a relation between the word and the annotation information thereof.

The invention is defined by a computer-implemented method and a system according to the independent claims. Preferred embodiments are defined in the dependent claims.

### BRIEF DESCRIPTION OF THE FIGURES

The above and other objects and features will become apparent from the following description with reference to the following figures, wherein like reference numerals refer to like parts throughout the various figures unless otherwise specified, and wherein:
FIGS. 1A to 1D illustrates a method for constructing a knowledge structure corresponding to denotation of a real world for a text according to an example of the present invention;
FIG. 2 illustrates a method for constructing an NLP schema and a knowledge database for a text according to an example of the present invention;
FIG. 3 illustrates a system for constructing an NLP schema for a text and for constructing a database thereof according to an example of the present invention;
FIG. 4 is a flow chart showing a method for constructing an NLP schema for a text and for constructing a database thereof according to an example of the present invention;
FIG. 5 is a flow chart showing a method for identifying a word (words) included in a text according to an example of the present invention;
FIG. 6 is a flow chart showing a method for constructing an NLP schema for a text according to an example of the present invention;
FIG. 7 is a flow chart showing a search result providing method based on an NLP schema for a text according to an example of the present invention;
FIG. 8 illustrates an NLP schema for a text according to an example of the present invention; and
FIGS. 9A and 9B illustrate NLP schemas for a plurality of texts according to an example of the present invention.

### DETAILED DESCRIPTION

Hereafter embodiments of the inventive concept will be described in conjunction with the accompanied figures. Throughout the figures, like numbers denote like elements.

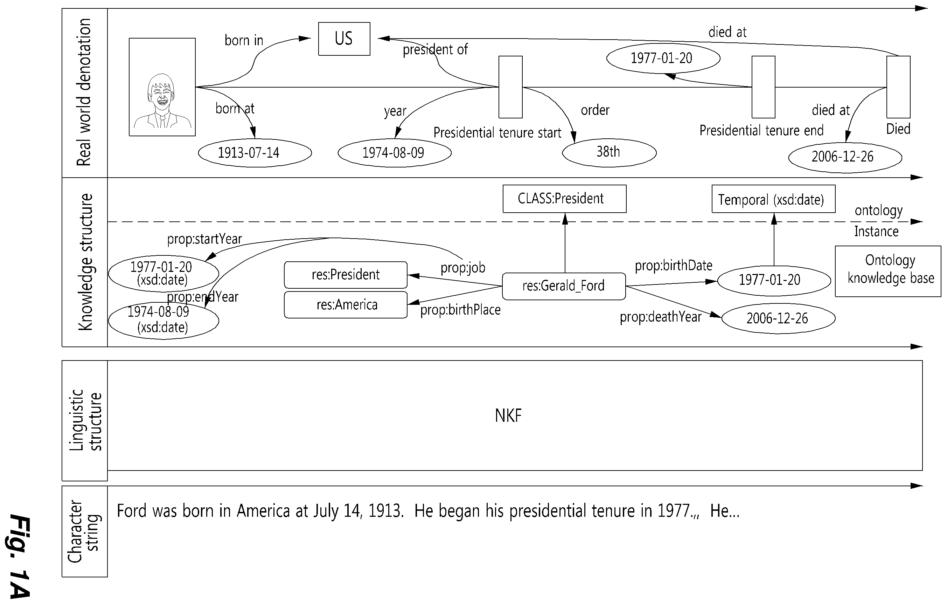

FIGS. 1A to 1D illustrates a method for constructing a knowledge structure corresponding to denotation of a real world for a text according to an example of the present invention.

For a text "Ford was born in America at July 14, 1913. He began his presidential tenure in 1977....", FIGS. 1A to 1D illustrate a denotation of the corresponding test in a real world and a knowledge structure constructed in a text environment.

A denotation of a text in a real world may indicate how to recognize information, which is included in the corresponding text, in the real world. For example, a denotation of a text in a real world may indicate that "Gerald Ford" was born in America, born at July 14, 1913, was the 38th president of America, began his presidential tenure from August 9, 1974 and terminated the tenure at January 20, 1977, and died at December 26, 2006.

A knowledge structure of a text may made by representing information, which is recognized in a denotation of a corresponding text in a real world, in a text environment. For example, a knowledge structure of a text may be an NLP schema for a text stored in an ontology knowledge base (knowledge database). For example, a knowledge structure of a text may indicate that "Gerald Ford (res: Gerald_Ford)" was born in America (prop:birthPlace), was born at July 14, 1913 (prop:birthDate), was the president of America (prop:job), began his presidential tenure from August 9, 1974 (prop:startYear) and terminated the tenure at January 20, 1977 (prop:endYear), and died at December 26, 2006 (prop:deathYear). A knowledge structure of a text may be constructed alone a time axis and may be constructed mostly close to information which is recognized from a denotation in a real world (or constructed to maximally include information which is recognized from a denotation of a real world).

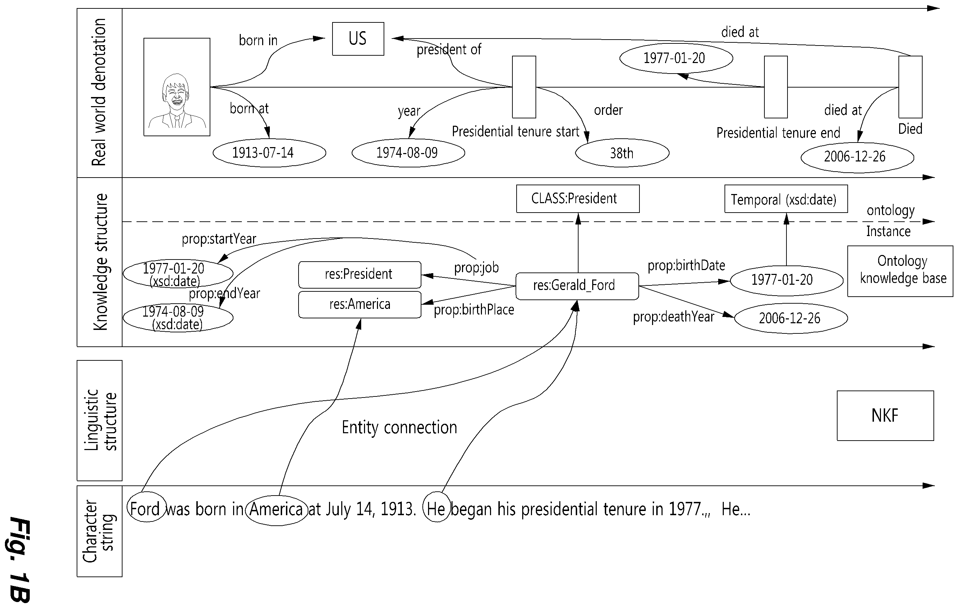

A knowledge structure of a corresponding text may be constructed through NLP annotation Knowledge base Format (NKF). For example, as illustrated in FIGS. 1B to 1D, respective words (entities) included in a text and/or information related to the text may be entitized and connected through nodes. And, relations between words are extracted to relate information, which indicates the corresponding relation, with the nodes. Then, NKF may represent a form of NLP annotation base.

In FIGS. 1A to 1D, "res" may indicate a knowledge entity (e.g., noun or word) in a text, and connection between entities (relation extraction) may be performed based on relation information between entities. For example, when a corresponding entity is verb, relation information with at least two different entities may be required for relation extraction for the corresponding entity with another entity.

NKF may construct a knowledge structure including annotation information based on language information analysis and the constructed knowledge structure may be constructed as a database. Additionally, responding to a search request by a user. Search information related to a text and a knowledge structure may be provided as a search result.

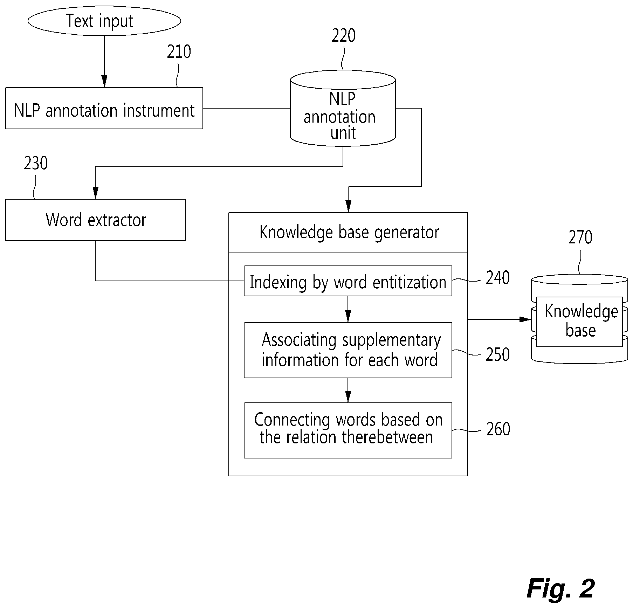

A method for constructing a knowledge structure (schema) for a text and constructing a database of the knowledge structure will be more described later in conjunction with FIGS. 2 to 9B.

FIG. 2 illustrates a method for constructing an NLP schema and a knowledge database for a text according to an example of the present invention.

In FIG. 2, there is a method for constructing an NLP schema including annotation information relating a text, through NLP for the text (which is received) according to the aforementioned NKP, and for constructing a database of the NLP schema.

In step 210, an NLP instrument may perform an NLP operation for a text (sentence) ((texts (sentences)) manually or automatically. In step 220, an NLP annotation unit may store and output annotation results (annotation information) for respective texts (sentences) after processing with the NLP annotation instrument. An output result from the NLP annotation unit may be different depending on a result of the step 210. In step 230, a word extractor may extract a target word (target words), which is to be used for schema construction from a text (sentence) in accordance with a desired purpose. For example, a noun or verb included in a sentence may be extracted as a target word. In step 240, a target word extracted by the extractor may be entitized and indexed. Entitization of a target word may be performed, for example, in a Resource Description Framework (RDF) schema. In step 250, supplementary information for extracted target words (identification information for respective target words and/or relation information between the target words) may be obtained and related to the target words. In step 260, relation between extracted target words may be obtained from the NLP annotation unit and may be associated with the target words, and the target words may be interconnected each other in accordance with the obtained relation. In step 270, a graph (corresponding to a schema for a text) constructed through the aforementioned steps 210 to 260, and/or information indicating a relation between extracted words and annotation information thereof, may be stored in a knowledge database.

The aforementioned steps 210 to 270 may be performed through a system 300 which is to be described later, or elements of the system 300.

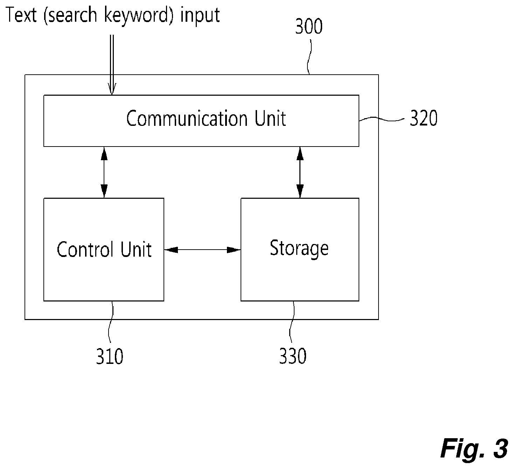

A method for constructing a knowledge structure (schema) for a text and a database of the knowledge structure will be more described in conjunction with FIGS. 3 to 9B.

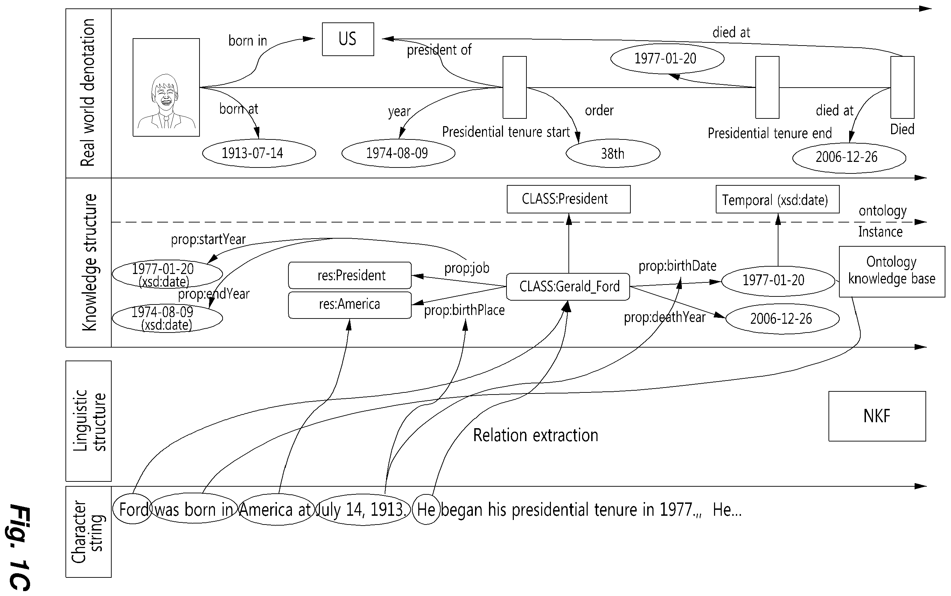

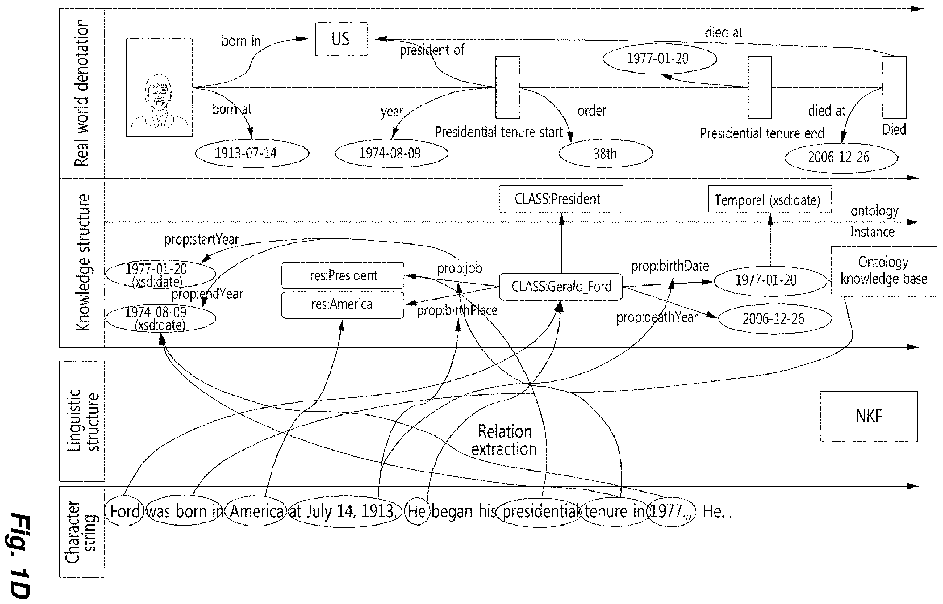

As the description stated in conjunction with FIG. 1 may be applicable with itself, further details will not be further provided hereafter.

FIG. 3 illustrates a system for constructing an NLP schema for a text and for constructing a database thereof according to an example of the present invention.

The system 300 may correspond to a system constructing an NLP schema for a text through NLP for the text according to the NKF described above in conjunction with FIGS. 1 and 2.

The system 300 may include a control unit 310, a communication unit 320, and a storage 330. The control unit 310 may manage elements of the system 300 and may execute a program or application which is employed in the system 300. For example, the control unit 310 may perform NLP for a text (which is received), and may execute a program or application for constructing a schema for the text. Additionally, the control unit 310 may operate calculation necessary for a program or application and for data processing. The control unit 310 may be at least one processor or at least a core of a processor.

The communication unit 320 may be a unit for allowing communication with a device (devices) or server which is different from the system 300. For example, the communication unit 320 may receive a text (or search keyword) from another device (other devices) or a server through any input device. Although not shown, the communication unit 320 may include one or more antennas for transmitting and receiving a signal and information to and from another device (other devices) or a server. The communication unit 320 may be a hardware module such as network interface card, network interface chip, or networking interface port, or a software module such as network device driver or networking program.

The storage 330 may store information related to a program or application for constructing a schema which is executed by the control unit 310, and/or the constructed schema. The storage 330 may be a database for storing words included in a text, or relations between corresponding words and identification information of the corresponding words. Otherwise, the storage 330 may be a database for storing a constructed schema. Different from the illustration, the storage 330 may be even formed as an additional device out of the system 300.

A method for constructing a knowledge structure (schema) by the system 300, and a database of the knowledge structure, will be more described in conjunction with FIGD. 4 to 9B.

As the description stated in conjunction with FIGS. 1 and 2 may be applicable with itself, further details will not be further provided hereafter.

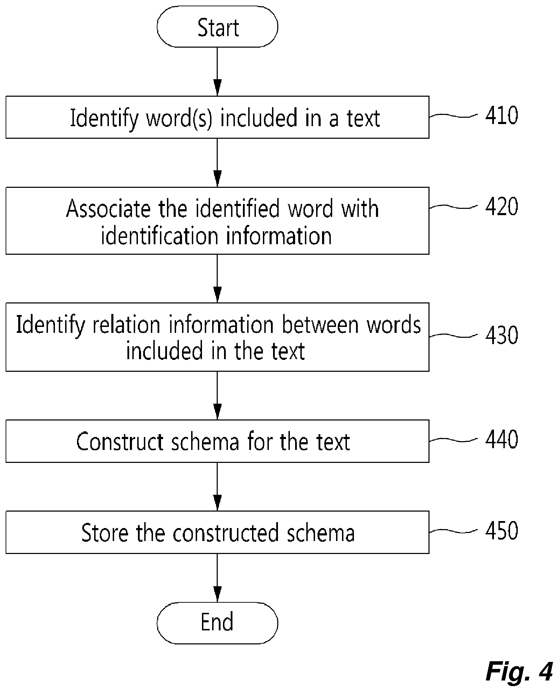

FIG. 4 is a flow chart showing a method for constructing an NLP schema for a text and for constructing a database thereof according to an example of the present invention.

In step 410, the control unit 310 may identify at least one word included in a text. A text may be a sentence including at least one word which is present in a document. A word included in a text may be a character or continuous character string which has a sense of itself. For example, a word may be a noun (noun phrase), verb (verbal phrase), adjective (adjective phrase), or adverb (adverbial phrase). A word may be a particle.

In step 420, the control unit 310 may associate identification information, which includes position information related to an identified word, with the identified word of the step 410. Identification information may be generated by the control unit 310 through an NLP work for a text. Identification information related to a word may be at least one of Uniform Resource Identifier (URI) information of an identified word, information about a part of speech of the identified word, and linguistic information of the identified word. URI information of an identified word may include at least one of information about which document includes an identified word (position information of a document), information about which sentence of which document includes the identified word (position information of a sentence), and information about which position corresponds to the identified word in the sentence. For example, URI information of an identified word may include URL information of a document including the identified word.

Additionally, identification information may include at least one of information indicating a position of a text (sentence) in a document including the text (sentence), information indicating a position of an identified word in the text (sentence), information indicating a result of morphological analysis of the identified word, information indicating a part of speech of the identified word, information indicating a named entity of the identified word, and information indicating a tag of the named entity of the identified word. A named entity may be a category classified based on a sense of a word. For example, a named entity may represent a person's name, an organization's name, or a place name. A named entity may correspond to "CLASS" of FIGS. 1 to 1D. A part of speech may be, for example, a verb (verbal phrase), noun (noun phrase), adjective (adjective phrase), or adverb (adverbial phrase).

Identification information may include annotation information (supplementary information) obtained from a text through NLP of the aforementioned steps 210 and 220.

In step 430, the control unit 310 may identify relation information between an identified word and another word included in a text, based on identification information. Relation information may be information indicating dependency between the identified word and another word. Relation information may be generated by the control unit 310 through an NLP work for a text. Dependency may be at least one of nexus between an identified word and another word, subject-object relation, modification, adverbial relation (determining which one is an adverb), and other dependencies.

Relation information may be included in annotation information (supplementary information) which is obtained for a text through NLP of the steps 210 and 220 aforementioned on conjunction with FIG. 2.

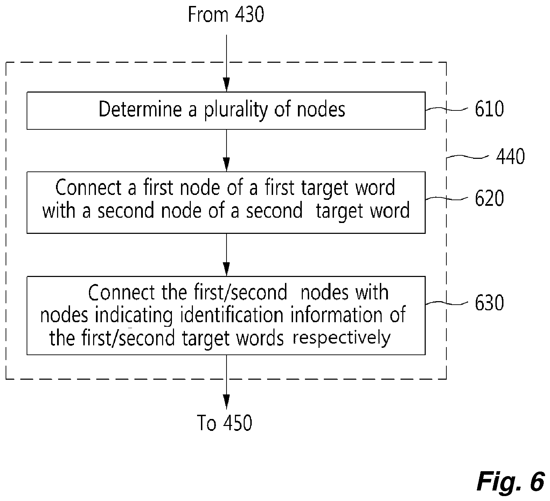

In step 450, the control unit 310 may construct a schema for a text based on identification information and relation information of words in the text. A constructed schema (NKF schema) may be an RDF schema which is constructed by entitizing identified words of a text. In other words, a constructed NKF schema may show information, which is based on respective words of a text, through an RDF graph. A schema and a method for constructing the schema will be further described later in conjunction with FIGS. 6, 8, 9A, and 9B.

In the case that a word identified in a text is also included in another text different from the text, that is, in the case that the same word is present in a sentence or in sentences of a plurality of documents, at the steps 420 and 430, control unit 310 may generate identification information for each of the words, even for another text (other texts) as well as for the text, to associate the identification with the words, and may identify relation information between each word and another word in said another text (other texts).

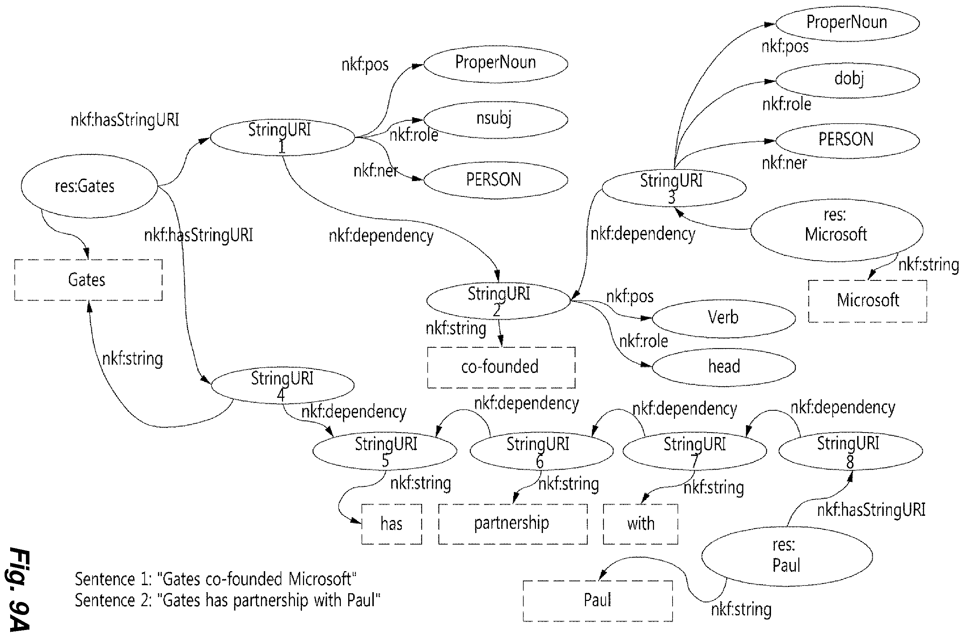

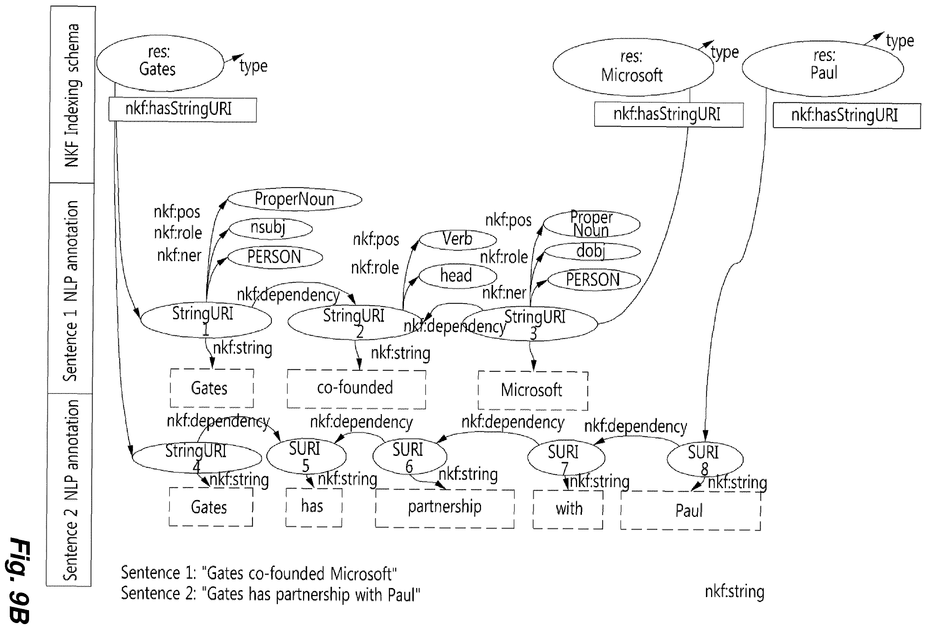

In the step 430, as for the case that an identified word is included in a second text which is different from a first text, the control unit 310 may identify relation information between the identified word and another word included in the second text. And, in step 440, the control unit 310 may construct a schema for the second text based on identification information of the identified word and relation information between the identified word and another word included in the second text. For example, an NLP schema may be constructed for all texts including the same word. An NLP schema constructed for a plurality of texts will be further described later in conjunction with FIGS. 9A and 9B.

In the step 450, the control unit 310 may store a schema, which is constructed in the step 440, in a database (or the storage 330). Then, a knowledge database may be constructed for the schema.

On the other hand, the control unit 310 may store information, which relates to relation between an identified word and identification information of the identification information, in a database (or the storage 330). The storage 330 may store at least one of a schema, and information about the identification information between an identified word and the identification information. For example, the control unit 310 may store correlation (correlation information) between entitized words of a text and identification information of the words in a database (or the storage 330). By storing information about entitized words in a database, the entitized word may have its own unique value. By indexing entitized words, a search speed for the corresponding words may increase. An RDF graph may be generated based on words to construct a schema.

As the description stated in conjunction with FIGS. 1 to 3 may be applicable with itself, further details will not be further provided hereafter.

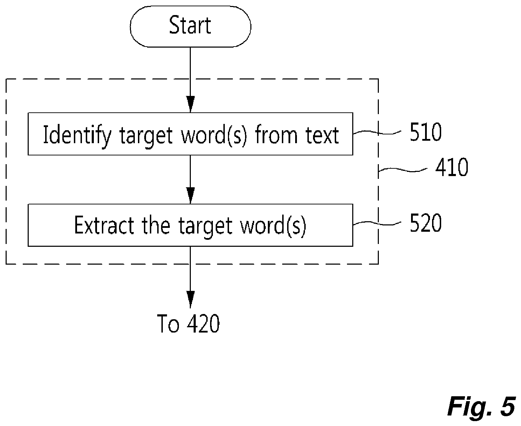

FIG. 5 is a flow chart showing a method for identifying a word (words) included in a text according to an example of the present invention.

A method for identifying (extracting) a word (words) from a text will be described in more detail with FIG. 5. Steps 510 and 520 described below may be included in the aforementioned step 410 of FIG. 4.

In the step 510, the control unit 310 may determine target words, which are valid in constructing a schema, from words included in a text. "Target word" may be a character string having a sense in itself, or may correspond to a word of a text forming a node in constructing a schema (Goal to String; GoS). For example, determination of target words may be performed by classifying words of a text in accordance with a part of speech or a predetermined tag set, or by classifying words of a text in accordance with other morphological analysis. "Target word" may be as each word in a text, not a particle but a verb or noun.

In the step 520, the control unit 310 may extract target words which are determined in the step 510. The extracted target words may be used in determining a node of a schema to be constructed in the step 440.

A method for constructing a schema will be described in more detail in conjunction with FIG. 6. As the description stated in conjunction with FIGS. 1 to 4 may be applicable with itself, further details will not be further provided hereafter.

FIG. 6 is a flow chart showing a method for constructing an NLP schema for a text according to an example of the present invention.

Steps 610 to 630 described below may be included in the aforementioned step 440 of FIG. 4.

In the step 420, the control unit 310 may associate identification information of respective target words, which are extracted in the step 510, with the target words. In the step 430, the control unit 310 may identify relation information between at least two target words of the extracted target words.

In the step 610, the control unit 310 may determine a plurality of nodes associated with extracted target words and identification information of each of the extracted target words. For example, the control unit 310 may determine nodes associated with each of the extracted target words, and may additionally determine nodes associated with information about each of the target words which are indicated by identification information.

In the step 620, based on relation information identified in the step 430, the control unit 310 may connect a first mode associated with a first target word of extracted target words, with a second node associated with a second target word related to the first target word. The second target word may have dependency with the first target word. In connecting nodes, information indicating relation information may be added and included in a schema.

In the step 630, the control unit 310 may connect the first node with a node of the plurality of nodes indicating identification information of the first target word, and may connect the second node with a node of the plurality of nodes indicating identification information of the second target word. In connecting nodes, information indicating identification information may be added and included in a schema.

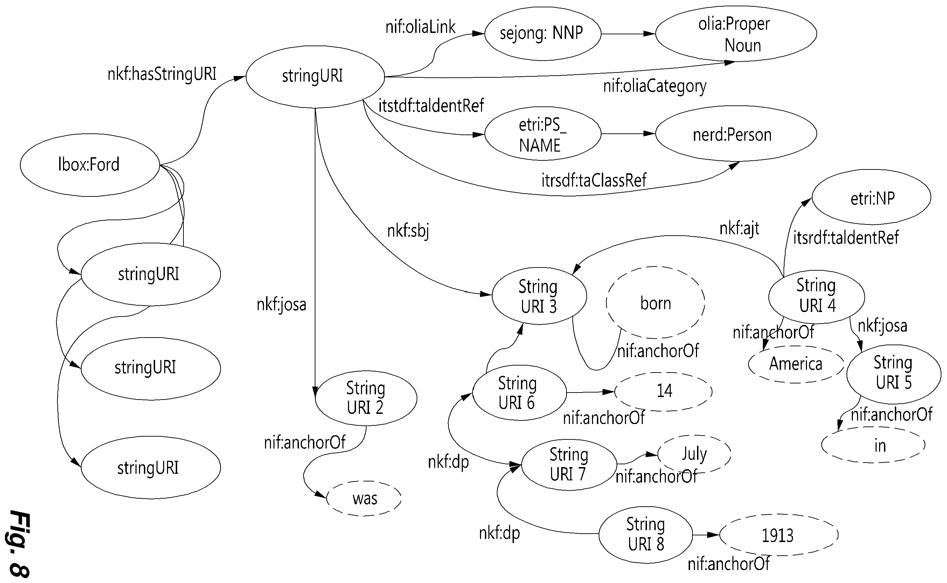

A constructed schema may be implemented in a graph having a tree structure in which a first node is present at the higher level. A constructed schema will be more detailed in conjunction with FIGS. 8, 9A, and 9B.

A first target word associated with a first node may be included in a search keyword which is input by a user. For example, a first target word may be a target word which, to be indexed, is included in a search keyword input by a user.

As the description stated in conjunction with FIGS. 1 to 5 may be applicable with itself, further details will not be further provided hereafter.

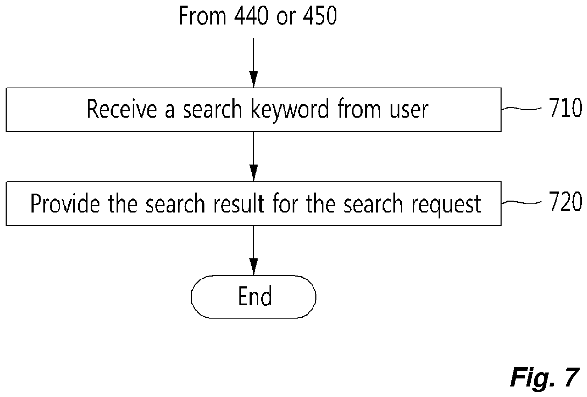

FIG. 7 is a flow chart showing a search result providing method based on an NLP schema for a text according to an example of the present invention.

In step 710, the control unit 310 may receive a search keyword from a user through the communication unit 320.

In step 720, for the case that a received search keyword includes a word (corresponding to an identified word aforementioned through FIGS. 4 to 6) related to a constructed schema, the control unit 310 may provide a search result, which is based on the constructed schema, as a result with the search keyword for a search request of a user. For example, information on the associated word included in the constructed schema may be provided as a search result. That is, a search result including plentiful information may be quickly provided to a user without the aid of an external index unit.

As the description stated in conjunction with FIGS. 1 to 6 may be applicable with itself, further details will not be further provided hereafter.

FIG. 8 illustrates an NLP schema for a text according to an example of the present invention.

The graph shown in FIG. 8 may correspond to an example of an NKF graph included in a schema which is constructed by the system 300 described above in conjunction with FIGS. 4 to 7.

In FIG. 8, an NKF graph is shown for a text (sentence) "Ford was born in America at July 14, 1913".

The Ibox may be a database (the storage 330) for storing correlation between a word, which is included in a text, or a corresponding word and identification information of the word. Information about each word may be entitized and stored with its own unique value in the Ibox. That is, the Ibox may be a component of the database of a constructed text schema.

NKF ontology terms and annotation formats used in the NKF graph will be described below. Annotations used herein may information included in identification information and relation information for respective words which are described above. An annotation format used in examples of the present invention may be different from the following examples.

### 1. Annotation format for word

### 1) nif:StringURI

The String URI may be an inherent value indicating position information of a character string of a word. The String URI may be represented as follows in accordance with the NIF 2.0 standard and the RFC 5147 standard.

### <URL#charx,y>

The x may indicate a start position of a corresponding character string and the y may indicate an end position of the corresponding character string. Position information may begin from 0, disregarding spacing. Position information must note the follows in compliance with of the NIF 2.0 standard.
context(6.3.1.1), begin index(6.3.1.2), end index(6.3.1.3)

### 2) nif:referenceContext

The referenceContext may indicate a position of sentence where a corresponding word appears. That is, the referenceContext may indicate a position of a sentence where a word of appears in the knowledge base. The referenceContext may be usefully employed in identifying a context of a corresponding word.

An ontology type may be "ObjectProperty", a domain may be "nif:String-entity", and a range may be "nif:StringURI".

### 3) nif:beginlndex

The beginlndex may indicate the first position of a word of a knowledge base.

An ontology type may be "DatatypeProperty", a domain may be "nif:String-entity", and a range may be "xsd:nonNegativelnger".

### 4) nif:endlndex

The endlndex may indicate the last position of a word of a knowledge base.

An ontology type may be "DatatypeProperty", a domain may be "nif:String-entity", and a range may be "xsd:nonNegativelnger".

### 5) nkf:String-entity

The String-entity may indicate an entity on a knowledge base, i.e., a word in NKF. An ontology type may be "Class".

### 6) nkf:hasStringURI

The hasStringURI may be a property indicating which position of a practical sentence includes a word of a knowledge base.

An ontology type may be "DatatypeProperty", a domain may be "nif:String-entity", and a range may be "nif:StringURI".

### 7) nkf:anchorOf

The nkf:anchorOf may be a property indicating which position of a practical sentence includes a word of a knowledge base.

An ontology type may be "DatatypeProperty" and a domain may be "nif:String-entity".

### 2. Annotation format for information of a part of speech

### 1) nif:oliaLink

The oliaLink may indicate an annotation of tag information for a part of speech.

An ontology type may be "ObjectProperty", a domain may be "nif:StringURI", and a range may be "Individual".

### 2) nif:oliaCategory

The oliaCategory may indicate a part-of-speech conceptualized annotation as a result of morphological analysis for a word of a knowledge base.

An ontology type may be "ObjectProperty", a domain may be "nif:StringURI", and a range may be "Class"

### 3. Annotation format for information of named entity

Information of named entity may use an NERD ontology and the annotation processing thereof may use ITS ontology of W3C.

### 1) itsrdf:taClassRef

The taClassRef may indicate a named-entity conceptualized annotation for a word of a knowledge base.

An ontology type may be "ObjectProperty", a domain may be "nif:StringURI", and a range may be "Class".

### 2) itsrdf:taldentRef

The taldenRef may indicate an named-entity tag annotation for a word of a knowledge base. An ontology type may be "ObjectProperty", a domain may be "nif:StringURI", and a range may be "Individual".

### 4. Annotation format for information of syntactic analysis

An NLP analysis result is given in the form of arranging analysis results for inherent values of sentences. Accordingly, for the purpose of representing the result based on words, it needs new property definition capable of representing dependency between words.

### 1) nkf:sbj

The sbj may indicate dependency between respective String URIs. In this case, it may mean that Subject is an subject of Object.

An ontology type may be "ObjectProperty", a domain may be "nif:StringURI", and a range may be "nif:StringURI".

### 2) nkf:obj

The obj may indicate dependency between respective String URIs. In this case, it may mean that Subject may be an object of Object.

An ontology type may be "ObjectProperty", a domain may be "nif:StringURI", and a range may be "nif:StringURI".

### 3) nkf:ajt

The ajt may indicate dependency between respective String URIs. In this case, it may mean that Subject is an adverb of Object.

An ontology type may be "ObjectProperty", a domain may be "nif:StringURI", and a range may be "nif:StringURI".

### 4) nkf:josa

The josa may indicate dependency between respective String URIs. In this case, it may mean that Object is a particle of Subject.

An ontology type may be "ObjectProperty", a domain may be "nif:StringURI", and a range may be "nif:StringURI".

### 5) nkf:dp

The dp may indicate dependency between respective String URIs. An ontology type may be "ObjectProperty", a domain may be "nif:StringURI", and a range may be "nif:StringURI".

By using the aforementioned annotations, it may be allowable to represent information, which is based on a word included in a text, in an RDF graphic form as shown therein.

As the description stated in conjunction with FIGS. 1 to 7 may be applicable with itself, further details will not be further provided hereafter.

FIGS. 9A and 9B illustrate NLP schemas for a plurality of texts according to an example of the present invention.

The schemas shown in FIGS. 9A and 9B may correspond to examples of NKF graphs included in schemas for texts including "Gates" (Sentence 1: "Gates co-founded Microsoft", Sentence 2: "Gates has partnership with Paul").

Detailed applicable examples will be described hereafter.

In examples below, the word "Gates" and "Mocrosoft" are entitized in the RDF schema.

A namespace URI must be specified.
@prefix nkf: <http://httpexample.nkf.org/entity/nkf>
@prefix : <http://example.nkf.org/entity/>
:String rdf:type nkf:Entity
Entitization of the string
:String rdf:type nkf:Entity
Example sentence: "Gates co-founded Microsoft"
:Gates rdf:type nkf:Entity
:Mocrosoft rdf:type nkf:Entity

An entitized string may be "noun", "verb", "named entity", or any string in which a user is interested.

URI (or unique value) is given to an entitized word. In this example, URI for each "Gates" of web documents with respect to the entitized word "Gates" was given based on its position information.

An entitized string may be mapped with String URO and/or Sentence URI.
:String nkf:hasStrringURI <StringURI>
:String nkf:hasSentenceURI <SentenceURI>
Example sentence: "Gates co-founded Microsoft"
:Gates
nkf:hasStringURI
<http://example.org.html#char=0.5>
nkf:hasSentenceURI
<http://example.org/example.html#char=0.25>

Respective practical words are mapped for the URI. A string may be mapped with its corresponding String URI and/or Sentence URI.
<StringURI> rdf:type nkf:String
<StringURI> nkf:string "STRING"
<StringURI> nkf:hasSentenceURI <SentenceURI>
Example sentence: "Gates co-founded Microsoft"
<http:Hexample.org/example.html#char=0.5>
rdf:type nkf:String
ntf:string "Gates"
rdf:hasSentenceURI
<http://example.org/example.html#char=0.25>

Part-of-speech information of a word is added as an annotation for the previously given unique value of each word (part-of-speech tag annotation).
<StringURI> nkf:pos <postag>
Example sentence: "Gates co-founded Microsoft"
<http://example.org/example.html#char=0.5>
nkf:pos tag:ProperNoun

Named-entity tag information of a corresponding word is added as an annotation for the previously given inherent values of respective words (NER tag annotation).
<StringURI> nkf:ner <NERtag>
Example sentence: "Gates co-founded Microsoft"
<http://example.orf/example.html#char=0.5>
nkf:ner tagPerson
dependency of a sentence (word) is added as an annotation for the previously given inherent values of respective words.
<StringURI> nkf:dependency <StringURI>
<StringURI> nkf:role <Dependency_Role>
Example sentence: "Gates co-founded Microsoft>
<http://example.org/example.html#char=0.5>
nkf:dependency
<http://example.org/example.html#char=6.16>
nkf:role
role:nsbj

As illustrated in FIGS. 9A and 9B, although the same word "Gates" are present in a plurality of texts, different StringURIs (StringURI 1, 4) may be allocated to respective texts and then information related to the texts may be differentiated in accordance with contexts.

Additionally, as illustrated herein, as an NKF graph for Sentence 1 is correlated to a graph for Sentence 2, it may be allowable to obtain information of relation between "Paul" and "Microsoft". For example, in the case of searching "Paul", it may be allowable to also obtain information that "Paul" is a co-founder of "Microsoft", even without the aid of an external index unit.

In the case without an schema for NTF index as illustrated in FIG. 9A, finding all instances including the common word "Gates" may cause its search speed to be slower in proportion to the number of StringURIs because whether the word "Gates" is present for all StringURIs needs to be searched as many as the number of StringURIs (i.e., a general NIF needs to search whether all StringURIs correspond to "Gates" and "Microsoft" and whether nif:dependency is present, whereas this example of the present invention may search nif:dependency without search for StringURI because "Gates" and "Microsoft" are preliminarily registered in a knowledge base).

As the description stated in conjunction with FIGS. 1 to 8 may be applicable with itself, further details will not be further provided hereafter.

The description about the aforementioned examples of the present invention may be similarly applicable to a text which is written in another language but Korean and English.

The aforementioned description may be related to the international standard of ISO/TC 37/SC 4 Language Resource Management.

Additionally, the description about the aforementioned examples of the present invention may be applicable to specifications of the following standards.
World Wide Web Consortium (W3C)
Resource Description Framework (RDF)
RDF - http://www3.org/RDF/
RDFS 1.1 (RDF Schema) - http://www3.org/TR/rdf-schema/
Web Ontology Language (OWL)
OWL - http://www3.org/TR/owl-features/
International Tag Set (ITS)
ITS 2.0 - http://www3.org/TR/its20/
NLP Interchange Format (NIF)
NIF core http://persistence.uni-leipzig.org/nlp2rdf/ontologies/nif-core/nif-core.html
Named Entity Recognition and Disambiguation (NERD) http://nerd.eurecom.fr/ontology
Ontologies of Linguistic Annotation (OLiA) http://nachhalt.sfb632.ini-postsdam.de/owl/
Derivation, analysis, and representation of syntactic structure for a text may be applicable to specifications of the standard "ISO 24615-1:2014 Language resource management - - Syntatic Annotation Framework (SynAF) - - Part 1:Syntatic model".

Annotations may correspond to specifications (Feature-value pair denoting a linguistic property of a linguistic segment) of the standard "ISO 24615-1:2014 Syntatic Annotation Framework, 3.9".

Morphological analysis for a text may be referred to specifications of the standard "ISO 24611:2012 Language resource management - - Morpho-syntatic Annotation Framework (MAF)".

An apparatus described above may be implemented in hardware elements, software elements, and/or a combination of hardware and software elements. For example, an apparatus, unit, or element described above may be implemented with one or more universal or special computers, such as processor, controller, Arithmetic Logic Unit (ALU), digital signal processor, microcomputer, Field Programmable Gate Array (FPGA), Programmable Logic Unit (PLU), microprocessor, or other units capable of executing and responding instructions. A processing unit may perform an Operating System (OS) and one or more software applications executed in the OS. Additionally, a processing unit may access, store, control, and generate data in response to software executions. Although some example of the present invention is illustrated as employing one processing unit for convenience of understanding, it can be seen by those skilled in the art that a plurality and/or diversity of processing elements may be included in use. For example, a processing unit may include a plurality of processors or one processor and one controller. Additionally, a processing unit may be formed in other processing configuration like a parallel processor.

Software may include computer programs, codes, instructions, or one or more combinations with them, may configure a processing unit, or may instruct a processing unit independently or collectively. For being interpreted by a processing unit or for providing instructions or data to a processing unit, software and/or data may be embodied permanently or temporarily in some kind of machine, component, physical apparatus, virtual equipment, computer storage medium or unit, or transmitted signal wave. Software may be distributed in computer systems connected through a network and may be stored and executed in distribution. Software and data may be stored in one or more computer-readable recording media.

Methods according to embodiments of the inventive concept may be implemented in the form of program instructions executable through diverse computing means and may be recorded in computer readable media. The computer readable media may include independently or associatively program instructions, data files, data structures, and so on. Program instructions recorded in the media may be specially designed and configured for embodiments, or may be generally known by those skilled in the computer software art. Computer readable recording media may include magnetic media such as hard disks and floppy disks, optical media such as CD-ROM and DVD, magneto-optical media such as floptical disks, and hardware units, such as ROM, RAM, flash memory, and so on, which are intentionally formed to store and perform program instructions. Program instructions may include high-class language codes executable by computers using interpreters, as well as machine language codes likely made by compilers. The hardware units may be configured to function as one or more software modules for performing operations according to examples of the inventive concept, and vice versa.

According to embodiments of the inventive concept, it may be allowable to a method and system providing stable and reliable information to a user with high approachability to the information by constructing a NLP schema for a text through entitization of respective words which is included in the text and by constructing a database thereof.

According to embodiments of the inventive concept, it may be allowable to a method and system permitting a user to obtain usage of corresponding words on an index of character strings such as words, structure of sentences related to corresponding words, or language structures and sense relations between several words by indexing character strings such as words in a schema without an external index unit or additional analysis.

For example, it may be allowable to achieve desired results although the embodiments of the inventive concept are performed in other sequences different from the descriptions, and/or the elements, such as system, structure, device, circuit, and so on, are combined or assembled in other ways different from the descriptions, replaced or substituted with other elements or their equivalents. The scope of the invention is defined by the appended claims.

## Claims

1. A computer-implemented method for constructing a database for a schema for a text,
the method comprising:
identifying at least one word included in the text for constructing the schema for the text (410);
performing entitization of the word in a Resource Description Framework, RDF, schema, and indexing the entitized word;
associating identification information, which is a position information related to the identified word, with the identified word (420); wherein the position information comprises at least one of:
information of which document includes the identified word, i.e. position information of a document comprising the identified word,
information of which sentence of which document includes the identified word, i.e. position information of a sentence comprising the identified word, and
information of which position corresponds to the identified word in a sentence;
identifying relation information between the identified word and another word included in the text, based on the identification information (430);
constructing the schema for the text based on the identification information and the relation information (440), wherein the constructed schema is a RDF schema; and
storing the constructed schema in the database (450);
wherein identifying at least one word (410) comprises:
determining target words, which are valid in constructing the schema, from words included in the text (510);
extracting the determined target words (520);
wherein associating identification information (420) comprises:
associating identification information of each of the extracted target words with a corresponding target word of the extracted target words;
wherein identifying the relation information (430) comprises:
identifying relation information between at least two target words of the extracted target words;
wherein constructing the schema (440) comprises:
determining a plurality of nodes associated with each of the extracted target words and identification information associated with each of the extracted target words (610);
based on the identified relation information, connecting a first node associated with a first target word of the extracted target words with a second node associated with a second target word of the extracted target words related to the first target word (620); and
connecting the first node with a node of the plurality of nodes that indicates identification information of the first target word and connecting the second node with a node of the plurality of nodes that indicates identification information of the second target word (630).

2. The method of claim 1, wherein a word included in the text is a character or a continuous character string, which has a sense, in the text.

3. The method of claim 1, wherein the first target word is a word included in a search keyword input by a user.

4. The method of claim 1, wherein information on correlation between the identified word and the identified information is stored in a database.

5. The method of claim 1, wherein the identification information includes at least one of Uniform Resource Identifier (URI), information indicating a part of speech of the identified word, and linguistic information of the identified word.

6. The method of claim 5, wherein the identification information includes at least one of information indicating a position of the text in a document including the text, information indicating a position of the identified word in the text, information indicating a result of morphological analysis of the identified word, information indicating a part of speech of the identified word, information indicating a named entity of the identified word, and information indicating a tag of the named entity of the identified word.

7. The method of claim 1, wherein if the identified word is a word included in another text different from the text, the identifying of the relation information comprises identifying relation information between the identified word and another word included in the another text, and
wherein the constructing of the schema comprises constructing a schema for the another text based on identification information of the identified word and relation information between the identified word and the another word included in the another text.

8. The method of claim 1, wherein the relation information includes information indicating dependency between the identified word and the another word.

9. The method of claim 8, wherein the dependency is at least one of nexus, subject-object relation, and modification between the identified word and the another word.

10. The method for providing a search result using the schema of claim 1, further comprising:
receiving a search keyword from a user; and
if the search keyword includes the identified word, providing the search result, which is based on the constructed schema, as a result for search request from the user with the search keyword.

11. A system (300) for processing information included in a text, the system comprising:
a communication unit (320) configured to receive the text;
a control unit (310) configured to
identify at least one word included in the text,
to perform entitization of the word in a Resource Description Framework, RDF, schema, and to index the entitized word;
to associate identification information, which is a position information related to the identified word, with the identified word,
wherein the position information comprises at least one of:
information of which document includes the identified word, i.e. position information of a document comprising the identified word,
information of which sentence of which document includes the identified word, i.e. position information of a sentence comprising the identified word, and
information of which position corresponds to the identified word in a sentence;
to identify relation information between the identified word and another word included in the text, based on the identification information, and
to construct a schema based on the identification information and the relation information, wherein the constructed schema is a RDF schema; and
a storage (330) configured to store at least one of the constructed schema, and information on correlation between the identified word and the identification information,
wherein the control unit is further configured to:
determine target words, which are valid in constructing the schema, from words included in the text;
extract the determined target words;
associate identification information of each of the extracted target words with a corresponding target word of the extracted target words;
identify relation information between at least two target words of the extracted target words;
determine a plurality of nodes associated with each of the extracted target words and identification information associated with each of the extracted target words;
based on the identified relation information, connect a first node associated with a first target word of the extracted target words with a second node associated with a second target word of the extracted target words related to the first target word; and
connect the first node with a node of the plurality of nodes that indicates identification information of the first target word and connect the second node with a node of the plurality of nodes that indicates identification information of the second target word.

## Patentansprüche

1. Computerimplementiertes Verfahren zur Herstellung einer Datenbank für ein Schema für einen Text, wobei das Verfahren umfasst:
Identifizieren mindestens eines Wortes, das in dem Text enthalten ist, zur Herstellung des Schemas für den Text (410);
Durchführen einer Sensibilisierung des Wortes in einem Ressourcen-Beschreibungs-Rahmenwerk-, RDF, Schema, und Indizieren des sensibilisierten Wortes;
Zuordnen von Identifikationsinformationen, die Positionsinformationen sind, die sich auf das identifizierte Wort beziehen, zu dem identifizierten Wort (420); wobei die Positionsinformationen mindestens eines umfassen von:
Informationen darüber, welches Dokument das identifizierte Wort enthält, d. h. Positionsinformationen eines Dokuments, das das identifizierte Wort umfasst,
Informationen darüber, welcher Satz aus welchem Dokument das identifizierte Wort enthält, d. h. Positionsinformationen eines Satzes, der das identifizierte Wort umfasst, und
Informationen darüber, welche Position dem identifizierten Wort in einem Satz entspricht;
Identifizieren von Beziehungsinformationen zwischen dem identifizierten Wort und einem anderen Wort, das in dem Text enthalten ist, basierend auf den Identifikationsinformationen (430);
Herstellen des Schemas für den Text basierend auf den Identifikationsinformationen und den Beziehungsinformationen (440), wobei das hergestellte Schema ein RDF-Schema ist; und
Speichern des hergestellten Schemas in der Datenbank (450);
wobei das Identifizieren mindestens eines Wortes (410) umfasst:
Bestimmen von Zielworten, die bei der Herstellung des Schemas gültig sind, aus Worten, die in dem Text enthalten sind (510);
Extrahieren der bestimmten Zielworte (520);
wobei das Zuordnen von Identifikationsinformationen (420) umfasst:
Zuordnen von Identifikationsinformationen jedes der extrahierten Zielworte mit einem entsprechenden Zielwort der extrahierten Zielworte;
wobei das Identifizieren von Beziehungsinformationen (430) umfasst:
Identifizieren von Beziehungsinformationen zwischen mindestens zwei Zielworten der extrahierten Zielworte;
wobei das Herstellen des Schemas (440) umfasst:
Bestimmen mehrerer Knoten, die jedem der extrahierten Zielworte zugeordnet sind, und von Identifikationsinformationen, die jedem der extrahierten Zielworte zugeordnet sind (610);
basierend auf den identifizierten Beziehungsinformationen, Verbinden eines ersten Knotens, der einem ersten Zielwort der extrahierten Zielworte zugeordnet ist, mit einem zweiten Knoten, der einem zweiten Zielwort der extrahierten Zielworte, das sich auf das erste Zielwort bezieht, zugeordnet ist (620);
Verbinden des ersten Knotens mit einem Knoten der mehreren Knoten, der Identifikationsinformationen des ersten Zielwortes angibt, und Verbinden des zweiten Knotens mit einem Knoten der mehreren Knoten, der Identifikationsinformationen des zweiten Zielwortes angibt (630).

2. Verfahren nach Anspruch 1, wobei ein in dem Text enthaltenes Wort ein Zeichen oder eine fortlaufende Zeichenkette ist, die in dem Text einen Sinn ergibt.

3. Verfahren nach Anspruch 1, wobei das erste Zielwort ein Wort ist, das in einem von einem Benutzer eingegebenen Suchbegriff enthalten ist.

4. Verfahren nach Anspruch 1, wobei Informationen über eine Korrelation zwischen dem identifizierten Wort und den identifizierten Informationen in einer Datenbank gespeichert werden.

5. Verfahren nach Anspruch 1, wobei die Identifikationsinformationen mindestens eines von einem Uniform Resource Identifier (URI), Informationen, die einen Teil einer Aussprache des identifizierten Wortes angeben, und sprachlichen Informationen des identifizierten Wortes enthalten.

6. Verfahren nach Anspruch 5, wobei die Identifikationsinformationen mindestens eines von Informationen, die eine Position des Textes in einem Dokument, das den Text enthält, Informationen, die eine Position des identifizierten Wortes in dem Text angeben, Informationen, die ein Ergebnis einer morphologischen Analyse des identifizierten Wortes angeben, Informationen, die einen Teil der Aussprache des identifizierten Wortes angeben, Informationen, die eine benannte Entität des identifizierten Wortes angeben, und Informationen, die eine Markierung der benannten Entität des identifizierten Wortes angeben, enthalten.

7. Verfahren nach Anspruch 1, wobei, falls das identifizierte Wort ein Wort ist, das in einem anderen, zu dem Text unterschiedlichen Text enthalten ist, wobei das Identifizieren der Beziehungsinformationen Identifizieren von Beziehungsinformationen zwischen dem identifizierten Wort und einem anderen Wort, das in dem anderen Text enthalten ist, umfasst, und
wobei das Herstellen des Schemas Herstellen eines Schemas für den anderen Text basierend auf Identifikationsinformationen des identifizierten Wortes und Beziehungsinformationen zwischen dem identifizierten Wort und dem anderen Wort, das in dem anderen Text enthalten ist, umfasst.

8. Verfahren nach Anspruch 1, wobei die Beziehungsinformationen Informationen enthalten, die eine Abhängigkeit zwischen dem identifizierten Wort und dem anderen Wort angeben.

9. Verfahren nach Anspruch 8, wobei die Abhängigkeit mindestens eines von Verknüpfung, Subjekt-Objekt-Beziehung, und Modifizierung zwischen dem identifizierten Wort und dem anderen Wort ist.

10. Verfahren zur Bereitstellung eines Suchergebnisses unter Verwendung des Schemas nach Anspruch 1, ferner umfassend:
Empfangen eines Suchbegriffs von einem Benutzer; und
falls das Suchwort das identifizierte Wort enthält, Bereitstellen des Suchergebnisses, das auf dem hergestellten Schema basiert, als Ergebnis für die Suchanfrage des Benutzers mit dem Suchwort.

11. System (300) zur Verarbeitung von Informationen, die in einem Text enthalten sind, wobei das System umfasst:
eine Kommunikationseinheit (320), die konfiguriert ist, den Text zu empfangen;
eine Steuereinheit (310), die konfiguriert ist zum Identifizieren mindestens eines in dem Text enthaltenen Wortes,
um eine Sensibilisierung des Wortes in einem Ressourcen-Beschreibungs-Rahmenwerk-, RDF, Schema durchzuführen und das sensibilisierte Wort zu indizieren;
um Identifikationsinformationen, die Positionsinformationen sind, die sich auf das identifizierte Wort beziehen, dem identifizierten Wort zuzuordnen,
wobei die Positionsinformationen mindestens eines umfassen von:
Informationen darüber, welches Dokument das identifizierte Wort enthält, d. h. Positionsinformationen eines Dokuments, das das identifizierte Wort umfasst,
Informationen darüber, welcher Satz von welchem Dokument das identifizierte Wort enthält, d. h. Positionsinformationen eines Satzes, der das identifizierte Wort umfasst, und
Informationen darüber, welche Position dem identifizierten Wort in einem Satz entspricht;
um Beziehungsinformationen zwischen dem identifizierten Wort und einem anderen Wort, das in dem Text enthalten ist, basierend auf den Identifikationsinformationen zu identifizieren, und
um ein Schema basierend auf den Identifikationsinformationen und den Beziehungsinformationen herzustellen, wobei das hergestellte Schema ein RDF-Schema ist;
einen Speicher (330), der konfiguriert ist, mindestens eines des konstruierten Schemas, und Informationen über eine Korrelation zwischen dem identifizierten Wort und den Identifikationsinformationen zu speichern,
wobei die Steuereinheit ferner konfiguriert ist zum:
Bestimmen von Zielworten, die bei der Herstellung des Schemas gültig sind, aus Worten, die in dem Text enthalten sind;
Extrahieren der bestimmten Zielworte;
Zuordnen von Identifikationsinformationen jedes der extrahierten Zielworte zu einem entsprechenden Zielwort der extrahierten Zielworte;
Identifizieren von Beziehungsinformationen zwischen mindestens zwei Zielworten der extrahierten Zielworte;
Bestimmen mehrerer Knoten, die jedem der extrahierten Zielworte zugeordnet sind, und von Identifikationsinformationen, die jedem der extrahierten Zielworte zugeordnet sind;
basierend auf den identifizierten Beziehungsinformationen, Verbinden eines ersten Knotens, der einem ersten Zielwort der extrahierten Zielworte zugeordnet ist, mit einem zweiten Knoten, der einem zweiten Zielwort der extrahierten Zielworte, das sich auf das erste Zielwort bezieht, zugeordnet ist; und
Verbinden des ersten Knotens mit einem Knoten der mehreren Knoten, der Identifikationsinformationen des ersten Zielwortes angibt, und Verbinden des zweiten Knotens mit einem Knoten der mehreren Knoten, der Identifikationsinformationen des zweiten Zielwortes angibt.

## Revendications

1. Procédé implémenté par ordinateur pour construire une base de données pour un schéma pour un texte, le procédé comprenant de :
identifier au moins un mot inclus dans le texte pour construire le schéma pour le texte (410) ;
effectuer une entitisation du mot dans un schéma de cadre de description de ressources, RDF, et indexer le mot entitisé ;
associer une information d'identification, qui est une information de position relative au mot identifié, avec le mot identifié (420) ; dans lequel l'information de position comprend au moins un de :
une information de quel document inclut le mot identifié, c'est-à-dire une information de position d'un document comprenant le mot identifié,
une information de quelle phrase de quel document inclut le mot identifié, c'est-à-dire l'information de position d'une phrase comprenant le mot identifié, et
une information de quelle position correspond au mot identifié dans une phrase ;
identifier une information de relation entre le mot identifié et un autre mot inclus dans le texte, sur la base de l'information d'identification (430) ;
construire le schéma pour le texte sur la base de l'information d'identification et l'information de relation (440), dans lequel le schéma construit est un schéma RDF ; et
mémoriser le schéma construit dans la base de données (450) ;
dans lequel l'identification d'au moins un mot (410) comprend de :
déterminer des mots cible, qui sont valides pour la construction du schéma, d'après des mots inclus dans le texte (510) ;
extraire les mots cibles déterminés (520) ;
dans lequel l'association d'une information d'identification (420) comprend de :
associer une information d'identification de chacun des mots cibles extraits avec un mot cible correspondant des mots cibles extraits ;
dans lequel l'identification de l'information de relations (430) comprend de :
identifier une information de relation entre au moins deux mots cible des mots cibles extraits ;
dans lequel la construction du schéma (440) comprend de :
déterminer une pluralité de nœuds associés à chacun des mots cibles extraits et une information d'identification associée à chacun des mots cibles extraits (610) ;
sur la base de l'information de relation identifiée, connecter un premier nœud associé à un premier mot cible des mots cibles extraits avec un second nœud associé à un second mot cible des mots cibles extraits relatifs au premier mot cible (620) ; et
connecter le premier nœud avec un nœud de la pluralité de nœuds qui indique une information d'identification du premier mot cible et connecter le second nœud avec un nœud de la pluralité de nœuds qui indique une information d'identification du second mot cible (630).

2. Procédé selon la revendication 1, dans lequel un mot inclus dans le texte est un caractère ou une chaîne de caractère continue, qui a un sens dans le texte.

3. Procédé selon la revendication 1, dans lequel le premier mot cible est un mot inclus dans un mot-clé de recherche entré par un utilisateur.

4. Procédé selon la revendication 1, dans lequel une information relative à une corrélation entre le mot identifié et l'information identifiée est mémorisée dans une base de données.

5. Procédé selon la revendication 1, dans lequel l'information d'identification inclut au moins une d'une information d'identifiant de ressource uniforme, URI, indiquant une partie du discours du mot identifié et une information linguistique du mot identifié.

6. Procédé selon la revendication 5, dans lequel l'information d'identification inclut au moins une d'une information indiquant une position du texte dans un document incluant le texte, une information indiquant une position du mot identifié dans le texte, une information indiquant un résultat d'analyse morphologique du mot identifié, une information indiquant une partie du discours du mot identifié, une information indiquant une entité nommée du mot identifié et une information indiquant une balise de l'entité nommée du mot identifié.

7. Procédé selon la revendication 1, dans lequel si le mot identifié est un mot inclus dans un autre texte différent du texte, l'identification de l'information de relation comprend d'identifier une information de relation entre le mot identifié et un autre mot inclus dans un autre texte et
dans lequel la construction du schéma comprend de construire un schéma pour un autre texte sur la base d'une information d'identification du mot identifié et une information de relation entre le mot identifié et un autre mot inclus dans un autre texte.

8. Procédé selon la revendication 1, dans lequel l'information de relation avec une information indiquant une dépendance entre le mot identifié et un autre mot.

9. Procédé selon la revendication 8, dans lequel la dépendance est au moins une de nexus, relation sujet-objet et modification entre le mot identifié et un autre mot.

10. Procédé pour fournir un résultat de recherche en utilisant le schéma de la revendication 1, comprenant en outre de :
recevoir un mot-clé de recherche depuis un utilisateur ; et
si le mot-clé de recherche inclut le mot identifié, fournir le résultat de recherche, qui est basé sur le schéma construit, comme un résultat d'une demande de recherche par l'utilisateur avec le mot-clé de recherche.

11. Système (300) de traitement d'informations incluses dans un texte, le système comprenant :
une unité de communication (320) configurée pour recevoir le texte ;
une unité de commande (310) configurée pour
identifier au moins un mot inclus dans le texte,
effectuer une entitisation du mot dans un schéma de cadre de description de ressources, RDF, et indexer le mot entitisé ;
associer une information d'identification, qui est une information de position relative au mot identifié, avec le mode identifié,
dans lequel l'information de position comprend au moins une de :
une information de quel document inclut le mot identifié, c'est-à-dire une information de position d'un document comprenant le mot identifié,
une information de quelle phrase de quel document inclut le mot identifié, c'est-à-dire l'information de position d'une phrase comprenant le mot identifié, et
une information de quelle position correspond au mot identifié dans une phrase ;
identifier une information de relation entre le mot identifié et un autre mot inclus dans le texte, sur la base de l'information d'identification; et
construire un schéma sur la base de l'information d'identification et l'information de relation, dans lequel le schéma construit est un schéma RDF ; et
une mémoire (330) configurée pour mémoriser au moins un des schémas construits et une information relative à la corrélation entre le mot identifié et l'information d'identification,
dans lequel l'unité de commande est en outre configurée pour :
déterminer des mots cibles, qui sont valides pendant la construction du schéma, d'après des mots inclus dans le texte ;
extraire les mots cible déterminés ;
associer une information d'identification de chacun des mots cibles extraits avec un mot cible correspondant des mots cibles extraits ;
identifier une information de relation d'au moins deux mots cibles des mots cibles extraits ;
déterminer une pluralité de nœuds associés à chacun des mots cibles extraits et une information d'identification associée à chacun des mots cibles extraits ;
sur la base de l'information de relation identifiée, connecter un premier nœud associé à un premier mot cible des mots cibles extraits avec un second nœud associé à un second mot cible des mots cibles extrait par rapport au premier mot cible ; et
connecter le premier nœud avec un nœud de la pluralité de nœuds qui indique une information d'identification du premier mot cible et connecter le second nœud avec un nœud de la pluralité de nœuds qui indiquent une information d'identification du second mot cible.
